(19) Europäisches Patentamt
European Patent Office
Office européen des brevets

(11) **EP 1 676 145 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**04.03.2020 Patentblatt 2020/10**

(45) Hinweis auf die Patenterteilung:
**25.06.2008 Patentblatt 2008/26**

(21) Anmeldenummer: **05758848.5**

(22) Anmeldetag: **22.04.2005**

(51) Int Cl.:
***G01S 3/74*** (2006.01)

(86) Internationale Anmeldenummer:
**PCT/EP2005/004331**

(87) Internationale Veröffentlichungsnummer:
**WO 2005/103751 (03.11.2005 Gazette 2005/44)**

(54) **VERFAHREN UND VORRICHTUNG ZUR FUNKPEILUNG MEHRERER SPEKTRAL ÜBERLAPPENDER FUNKSTATIONEN**

METHOD AND DEVICE FOR THE RADIO DETERMINATION OF A NUMBER OF SPECTRALLY OVERLAPPING RADIO STATIONS

PROCEDE ET DISPOSITIF DE RADIOREPERAGE DE PLUSIEURS STATIONS RADIO A CHEVAUCHEMENT SPECTRAL

(84) Benannte Vertragsstaaten:
**DE FR GB IT**

(30) Priorität: **26.04.2004 DE 102004020276**

(43) Veröffentlichungstag der Anmeldung:
**05.07.2006 Patentblatt 2006/27**

(73) Patentinhaber: **Rohde & Schwarz GmbH & Co. KG**
**81671 München (DE)**

(72) Erfinder: **DEMMEL, Franz**
**85716 Unterschleissheim (DE)**

(74) Vertreter: **Körfer, Thomas et al**
**Mitscherlich PartmbB**
**Patent- und Rechtsanwälte**
**Postfach 33 06 09**
**80066 München (DE)**

(56) Entgegenhaltungen:
DE-A1- 4 407 716    US-A1- 2003 063 029

- SCHMIDT R O: "MULTIPLE EMITTER LOCATION AND SIGNAL PARAMETER ESTIMATION" IEEE TRANSACTIONS ON ANTENNAS AND PROPAGATION, IEEE INC. NEW YORK, US, Bd. AP-34, Nr. 3, 1. März 1986 (1986-03-01), Seiten 276-280, XP000644956 ISSN: 0018-926X

- Worms J.G.: "RF direction finding with a reduced number of receivers by sequential sampling", Phased Array Systems and Technology, 2000. Proceedings. 2000 IEEE Inte rnational Conference on Dana Point, CA, USA 21-25 May 2000, Piscataway, NJ, USA,IEEE, US, 21 May 2000 (2000-05-21), - 25 May 2000 (2000-05-25), pages 165-168, XP010504567, US DOI: 10.1109/PAST.2000.858932 ISBN: 978-0-7803-6345-8

- STOICA, P. ET AL: "Analysis of MUSIC and Prel. Study of MLM in Advances in Spectrum Analysis and Array Processing", Statistical Efficiency Study of Direction Estimation Methods Part 1, vol. II, no. Ch.7, 1991, pages 263-270, Englewood Cliffs, NJ

- SHEINVALD, J. ET AL: "Detection and Localization of Multiple Signals Using Subarrays Data", Advances in Spectrum Analysis and Array Processing, vol. III, no. Ch.7, 1995, pages 324-351, Englewood Cliffs, NJ

- J.G. Worms: "Superresolution with conformal broadband antenna arrays", Proceedings of the 2002 IEEE Radar Conference (IEEE Cat. No.02CH37322), IEEE, 1 January 2002 (2002-01-01), pages 425-431, XP055033325, DOI: 10.1109/NRC.2002.999756 ISBN: 97807803735710

EP 1 676 145 B2

**Beschreibung**

Die Erfindung betrifft ein Verfahren und eine Vorrichtung zur Funkpeilung mehrerer spektral überlappender Funkstationen über mehrere örtlich verteilte Antennen.

Die meisten üblichen Funkpeilungs-Systeme sind lediglich für die Richtungsbestimmung einer einzigen Funkstation pro Frequenzkanal geeignet. Bei mehreren örtlich verteilten Funkstationen überlagern sich die von den einzelnen Funkstationen ausgestrahlten Einzelwellen zu einer Gesamtwelle, aus der derartige Funkpeilungs-Systeme die Richtungen der einzelnen Funkstationen nicht mehr eindeutig ermitteln können. In diesem Fall kann von einem derartigen Funkpeilungs-System aus der empfangenen Gesamtwelle nur die Richtung der Funkstation mit dem höchsten Pegel ermittelt werden, welche im allgemeinen auch noch fehlerbehaftet ist.

Die Problemstellung ist dadurch gekennzeichnet, dass das von den einzelnen Funkstationen ausgestrahlte Signal hinsichtlich seines grundsätzlichen Aufbaus - beispielsweise schmalbandige Bodenwelle - bekannt, hinsichtlich bestimmter Parameter - beispielsweise Frequenzen der ausgestrahlten Signale oder Einfallsrichtung der ausgestrahlten Signale -, welche als konstant angenommen werden können, aber unbekannt ist. Für derartige Schätz-Problematiken, insbesondere für die Schätzung der Einfallsrichtungen mehrerer von örtlich verteilten Funkstationen ausgestrahlter Signale mit hoher Auflösung, wurden in den letzten Jahrzehnten zahlreiche Verfahren entwickelt.

Gemeinsam ist allen diesen Verfahren, dass von mehreren örtlich verteilten Antennen über mehrere Zeitpunkte die komplexwertigen Amplitudenwerte der empfangenen Gesamtwelle gemessen werden, aus den zeitlich verteilten Amplitudenwerte Korrelationsmatrizen berechnet werden und in Kombination mit einem durch Rechnung oder Messung bekannten sogenannten Richtungsvektor, der für jede Antenne die jeweilige Phasendifferenz der empfangenen ebenen Welle zur von einer Bezugsantenne empfangenen Welle in der Einfallsrichtung der empfangenen Gesamtwelle beschreibt, unter Ausnutzung eines Optimierungskriteriums eine vom Drehwinkel - und damit von der Richtung - abhängige Suchfunktion ermittelt wird, deren Extrema Lösungen für die Richtungen der gesuchten Funkstationen darstellen.

Zu den wesentlichen Schätz-Verfahren zählen der auf einer Eigenwert-Zerlegung der Korrelationsmatrix aufbauende MUSIC-Algorithmus (Multiple-Signal-Classification-Algorithmus, Ralph O. Schmidt, "Multiple Emitter Location and Signal Parameter Estimation", IEEE Transactions on Antennas and Propagation, Vol. AP34, No. 3, Seiten 276-280, März 1986), der gegenüber dem MUSIC-Algorithmus weniger rechenintensive ESPRIT-Algorithmus (Estimation-of-Signal-Parameters-via-Rotational-Invariance-Techniques-Algorithmus, Richard Ray, Thomas Kailath, "ESPRIT - Estimation of Signal Parameters Via Rotational Invariance Techniques, IEEE Transactions on Acoustics, Speech and Signal Processing, Vol. 37, No. 7, Seiten 984-995, Juli 1989), der auf der Minimierung der Euklidschen-Norm basierende Minimum-Norm-Algorithmus, der Maximum-Likelihood-Algorithmus und der Maximum-Entropie-Algorithmus.

Die über diese Schätz-Verfahren erzeugten Suchfunktionen weisen für beliebige Antennengruppen i.a. eine Vielzahl von Extrema - meistens Maxima - auf, deren Anzahl größer als die Anzahl der gesuchten Richtungen - Peilwerte - der Funkstationen ist. Diese unerwünschten Mehrdeutigkeiten können eliminiert werden, indem die Anzahl der verwendeten Antennen erhöht und gleichzeitig deren Abstand zueinander minimiert wird. Auf diese Weise werden die Mehrdeutigkeiten bildenden, überschüssigen Extrema unterdrückt und bilden im Idealfall eine Suchfunktion, die genau soviele Extrema aufweist, wie anzupeilende Funkstationen existieren. Mit der Unterdrückung der überschüssigen Extrema in der Suchfunktion erhöht sich gleichzeitig die Auflösung der Richtungsbestimmung der gesuchten Funkstationen.

Im praktischen Einsatz stellt eine Vielzahl von Antennen und damit einhergehend eine Vielzahl an Meßkanälen sowie ein hoher Bedarf an Verarbeitungsleistung zur Bestimmung der Peilwerte der gesuchten Funkstationen sehr schnell eine Beschränkung dar.

Eine Möglichkeit, die Vielzahl an Antennen bei gleich hoher Auflösung der Richtungsbestimmung zu reduzieren, ist in der Einführung von Antennen-Untergruppen zu sehen. Durch geschickte Wahl der Anzahl an Antennen je Antennen-Untergruppen und deren optimierte geometrische Positionierung kann hierbei eine Einsparung an Antennen und somit auch an Messkanälen erzielt werden. Die minimale Anzahl an Antennen je Antennen-Untergruppen liegt, wie weiter unten noch im Detail gezeigt wird, bei drei Antennen.

Aus der DE 44 07 716 A1 ist eine Vorrichtung zur Richtungsbestimmung überlagerten Gesamtwelle mittels obig benannter Schätz-Verfahren auf der Basis von in Antennen-Untergruppen angeordneten Antennen bekannt. Aus dieser Druckschrift kann entnommen werden, dass die einzelnen Antennen innerhalb der Antennen-Untergruppen jeweils einen Maximalabstand aufweisen müssen, der kleiner als die halbe Wellenlänge des ausgestrahlten Signals ist. Auf diese Weise wird erreicht, daß die von zwei benachbarten Antennen empfangenen Phasen der Gesamtwelle bei jedem beliebigen Einfallswinkel der Gesamtwelle sich nicht gegenseitig aufheben und somit jederzeit Eindeutigkeit in der Ermittlung der Einfallsrichtung der Gesamtwelle besteht.

Die Einführung von Antennen-Untergruppen mit einer gegenüber der Gesamtanzahl von Antennen reduzierten Antennenanzahl je Antennen-Untergruppe führt, wie oben ausgeführt ist, zur Bildung von Mehrdeutigkeiten in der zur jeweiligen Antennen-Untergruppe gehörigen Suchfunktion. Auch ein Vergleich der zu den einzelnen Antennen-Untergruppen gehörigen Suchfunktionen hinsichtlich bei identischen Drehwinkeln auftretender Extrema im Hinblick auf eine Bildung einer alle Antennen umfassende Gesamtsuchfunktion, die keine Mehrdeutigkeiten in den Extrema mehr aufweist, ist nicht realisierbar, wie im folgenden gezeigt wird.

Die Antennen sind in den einzelnen Antennen-Untergruppen der DE 44 07 716 A1 linear angeordnet. In linearen Antennen-Untergruppen angeordnete Antennen führen aber zu linear abhängigen Richtungsvektoren der einzelnen Antennen-Untergruppen. Werden die zu den einzelnen Antennen-Untergruppen gehörigen, linear abhängigen Richtungsvektoren für die Bildung der alle Antennen umfassenden Gesamtfunktion herangezogen, so ergibt sich aufgrund der linearen Abhängigkeit der Richtungsvektoren nachteilig eine Suchfunktion mit Mehrdeutigkeiten in den Extrema.

Die US 2003/063029 A1 beschreibt ein Verfahren, das auf der sequenziellen Ermittlung der Korrelationsmatrix der Antennenanordnung mit Hilfe einer zweikanaligen Messvorrichtung beruht. Die Richtungsbestimmung erfolgt in bekannter Weise aus der Korrelationsmatrix der kompletten Antenne. Ebenfalls wird die Suchfunktion aus den Messdaten der gesamten Antennen gebildet. Dabei setzt dieses Verfahren eine während der sequenziellen Messschritte konstante Amplitude voraus. Ist diese Voraussetzung nicht erfüllt, versagt das Verfahren.

Der Erfindung liegt daher die Aufgabe zugrunde, eine Vorrichtung und ein dazu passendes Verfahren zur gleichzeitigen Funkpeilung von mehreren örtlich verteilten Funkstationen über mehrere örtlich verteilte Antennen zu schaffen, um mit einer minimalen Anzahl von Antennen und Meßkanälen höchste Auflösung ohne Mehrdeutigkeiten in der Richtungsbestimmung der Funkstationen zu erzielen.

Die Erfindung wird durch ein Verfahren nach Anspruch 1 und eine Vorrichtung nach Anspruch 9 gelöst. Vorteilhafte Ausgestaltungen der Erfindung sind in den jeweils abhängigen Ansprüchen angegeben.

Bei der erfindungsgemäßen Vorrichtung nach Anspruch 9 handelt es sich um eine Anordnung von Antennen, die auf mehrere Antennen-Untergruppen aufgeteilt sind. Unter der Voraussetzung, daß mit der Antennenanordnung in einer ersten Vereinfachung nur eine eindimensionale Richtungsbestimmung- entweder der Azimuth oder die Elevation der einfallenden Gesamtwelle - durchgeführt wird, sind die Antennen in Antennen-Untergruppen mit jeweils mindestens drei Antennen anzuordnen. Mit minimal drei Antennen je Antennen-Untergruppe kann aus einem Empfangssignal, welches mit Rauschen überlagert ist, jeder beliebige Einfallswinkel einer oder zweier anzupeilender Funkstationen ermittelt werden. Im Hinblick auf eine erhöhte Auflösung in der Richtungsbestimmung sind zusätzliche Antennen in die einzelnen Antennen-Untergruppen zu integrieren.

Im Hinblick auf eine eindeutige Bestimmung der einzelnen zu den anzupeilenden Funkstationen gehörigen Peilwerte sind in der erfindungsgemäßen Vorrichtung Antennen-Untergruppen zu verwenden, mit denen Mehrdeutigkeiten in der zu allen Antennen gehörigen Gesamtsuchfunktion - Anzahl der Extrema der Gesamtsuchfunktion größer Anzahl der Peilwerte der gesuchten Funkstationen - vermieden werden können. Hierzu sind die Antennen in den einzelnen Antennen-Untergruppen jeweils derart anzuordnen, daß die zu den einzelnen Antennen-Untergruppen gehörigen Richtungsvektoren zueinander linear unabhängig sind. Lineare Unabhängigkeit der Richtungsvektoren der einzelnen Antennen-Untergruppen bedingt, daß die einzelnen Richtungsvektoren nicht die gleiche Richtung aufweisen dürfen. Es sind folglich Antennen-Untergruppen zu vermeiden, die jeweils linear angeordnete Antennen aufweisen, deren Richtungsvektoren durch eine Parallelverschiebung auf einer gemeinsamen Gerade zu liegen kommen.

Werden die einzelnen Antennen-Untergruppen mit ihren jeweils zugeordneten Antennen derart ausgelegt, ist eine von Mehrdeutigkeiten befreite Gesamt-Suchfunktion gewährleistet. Der in der Vorrichtung der DE 44 07 716 A1 offenbarte maximal zulässige Abstand zweier Antennen innerhalb einer Antennen-Untergruppe in der Größenordnung kleiner der halben Wellenlänge der empfangenen Gesamtwelle ist im Hinblick auf die Vermeidung von Mehrdeutigkeiten in der Gesamt-Suchfunktion der erfindungsgemäßen Vorrichtung somit kein zwingendes Kriterium mehr. Einzig im Hinblick auf eine erhöhte Auflösung sind die Abstände der Antennen zu minimieren bzw. die Anzahl der Antennen je Antennen-Untergruppe zu optimieren.

Die erfindungsgemäße Vorrichtung ist weiterhin durch einen gegenüber dem Stand der Technik minimierten Hardware-Aufwand gekennzeichnet. Hierzu ist nicht mehr für jede einzelne Antenne ein Meßkanal vorgesehen. Vielmehr ist die Anzahl der Meßkanäle auf die maximale Anzahl von Antennen je Antennen-Untergruppe beschränkt. Die einzelne Antennen-Untergruppe wird jeweils mit ihren zugehörigen Antennen über eine Schaltungvorrichtung zyklisch auf die reduzierte Anzahl von Meßkanälen weitergeschaltet. Auf diese Weise werden die von jeder Antennen-Untergruppe über deren Antennen empfangenen Amplitudenwerte der Gesamtwelle zyklisch einer Verarbeitungs-Einheit zur Bestimmung der einzelnen Peilwerte der anzupeilenden Funkstationen unter Minimierung der Hardware zugeführt.

Das in der Verarbeitungs-Einheit der erfindungsgemäßen Vorrichtung implementierte erfindungsgemäße Verfahren nach Anspruch 1 ermittelt getrennt für jede Antennen-Untergruppe mittels eines numerischen Algorithmus eine vom Drehwinkel abhängige Suchfunktion. Hierzu werden die von den einzelnen Antennen der jeweiligen Antennen-Untergruppe zu verschiedenen Zeitpunkten empfangenen Amplitudenwerte der Gesamtwelle zu einer Meßmatrix $X_i$ kombiniert, aus der durch Multiplikation mit der transjugierten Meßmatrix $X_i^*$ eine Korrelationsmatrix ermittelt wird. Bei Anwendung beispielsweise des MUSIC-Algorithmuses wird über eine Eigenwertzerlegung der Korrelationsmatrix über die zu den Rausch-Eigenwerten gehörigen Rausch-Eigenvektoren, wie weiter unten noch detaillierter dargestellt, und den je Antennen-Untergruppe abgespeicherten Richtungsvektoren, welche vorab im Rahmen eines Kalibriervorgangs ermittelt werden, die zur jeweiligen Antennen-Untergruppe gehörige Suchfunktion berechnet.

Diese Suchfunktion weist aufgrund der vergleichsweise geringen Anzahl an Antennen je Antennenuntergruppe noch Mehrdeutigkeiten auf. Zur Eliminierung der Mehrdeutigkeiten werden erfindungsgemäß alle zu den einzelnen Antennen-Untergruppen berechneten Suchfunktionen über eine Mittelwertbildung multiplikativ verknüpft. Die auf diese Weise gewonnene Gesamt-Suchfunktion, die alle Antennen berücksichtigt, weist aufgrund der linear unabhängigen Richtungsvektoren der einzelnen Antennen-Untergruppen keine Mehrdeutigkeiten auf. Außerdem werden vorzugsweise mit einem einheitlichen Schwellwert die Extrema der Gesamt-Suchfunktion identifiziert. Das Verfahren nach dem Stand der Technik verwendet in den einzelnen Suchfunktionen u.U. unterschiedliche Schwellwerte, mit denen u.U. die falschen Mehrdeutigkeiten in den einzelnen Suchfunktionen beseitigt werden.

Neben dem weit verbreiteten MUSIC-Algorithmus als numerisches Schätzverfahren zur Richtungsbestimmung überlagerter Wellen, siehe z.B. auch DE 101 57 109 A1, können alternativ auch andere numerische Schätz-Verfahren wie beispielsweise der Maximum-Likelihood-Algorithmus nach Capon (Capon, "High-resolution frequency-wave number spectrum analysis", Proceedings IEEE, Vol. 57, Seiten 1408-1418, 1969) oder der Maximum-Entropy-Algorithmus nach Burg Anwendung finden. Jedes dieser Verfahren weist spezifische Vor- und Nachteile auf.

Eine Ausführungsform des erfindungsgemäßen Verfahrens und der erfindungsgemäßen Vorrichtung zur gleichzeitigen Funkpeilung mehrerer örtlich verteilter Funkstationen wird nachfolgend unter Bezugnahme auf die Zeichnung näher erläutert. In der Zeichnung zeigen:

Fig. 1    ein Blockschaltbild einer erfindungsgemäßen Vorrichtung zur gleichzeitigen Funkpeilung mehrerer örtlich verteilter Funkstationen,

Fig. 2    ein Flußdiagramm eines erfindungsgemäßen Verfahrens zur gleichzeitigen Funkpeilung mehrerer örtlich verteilter Funkstationen,

Fig. 3    eine grafische Darstellung der Gesamt-Suchfunktion und

Fig. 4    eine grafische Darstellung der zu den vier Antennen-Untergruppen gehörigen Suchfunktionen.

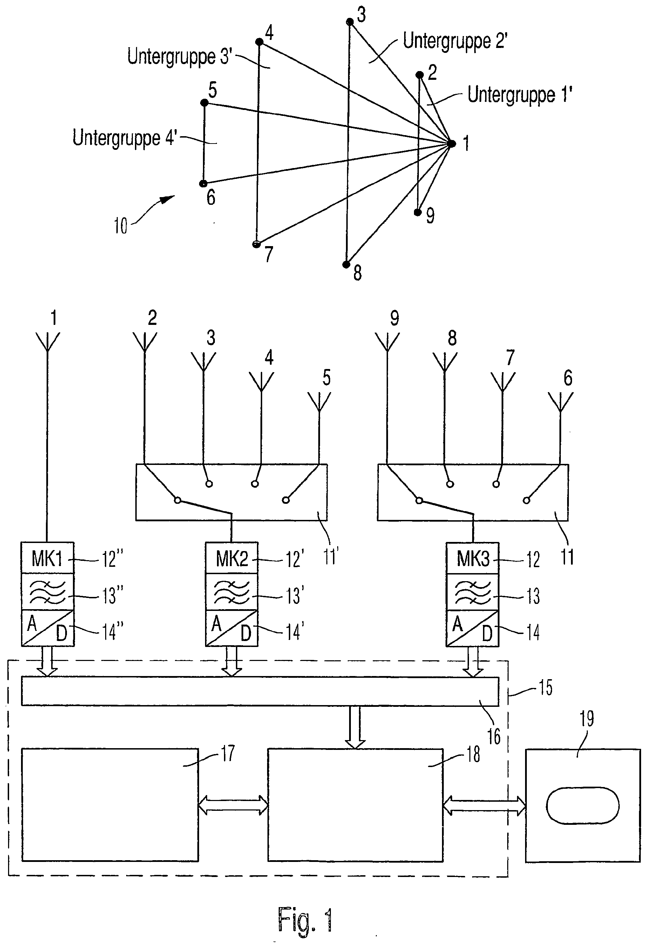

Die erfindungsgemäße Vorrichtung zur gleichzeitigen Funkpeilung mehrerer - im allgemeinen Fall insgesamt N - örtlich verteilter Funkstationen, welche beispielhaft in Fig. 1 dargestellt ist, besteht aus einer flächigen Anordnung 10 von Antennen 1, 2, 3, 4, 5, 6, 7, 8 und 9. Diese Antennen 1, 2, 3, 4, 5, 6, 7, 8 und 9 sind in Fig. 1 beispielhaft in eine Antennen-Untergruppe 1', bestehend aus den Antennen 1, 2 und 9, einer Antennen-Untegruppe 2', bestehend aus den Antennen 1, 3 und 8, einer Antennen-Untergruppe 3', bestehend aus den Antennen 1, 4 und 7, und einer Antennen-Untergruppe 4', bestehend aus den Antennen 1, 5 und 6, aufgeteilt.

Erfindungsgemäß kann die flächige Anordnung 10 an Antennen 1, 2, 3, 4, 5, 6, 7, 8 und 9 auch aus einer Antennen-Anzahl M größer neun, einer Anzahl P an Antennen-Untergruppen größer vier und einer Anzahl H an Antennen je Antennen-Untergruppe 1', 2', 3'und 4' größer vier zusammengesetzt sein. Generell muß, wie weiter oben schon ausgeführt ist, die Anzahl P an Antennen je Antennen-Untergruppe 1', 2', 3'und 4' auf minimal drei begrenzt sein. Auch können eine oder mehrere Antennen, wie beispielsweise in Fig. 1 die Antenne 1, mehreren Antennen-Untergruppen 1', 2', 3'und 4' zugeordnet sein.

Für die geometrische Anordnung 10 der einzelnen Antennen 1, 2, 3, 4, 5, 6, 7, 8 und 9 innnerhalb der zugehörigen Antennen-Untergruppen 1', 2', 3' und 4' wie auch für die geometrische Anordnung der einzelnen Antennen-Untergruppen 1', 2', 3' und 4' zueinander gibt es erfindungs- und verfahrensbedingt nur eine einzige Ausnahme. Wie weiter unten noch aufgezeigt wird, dürfen keine der Antennen-Untergruppen 1', 2', 3' und 4' Antennen-Strukturen mit zueinander parallelen Richtungsvektoren aufweisen. Eine Begrenzung des Abstands der einzelnen Antennen 1, 2, 3, 4, 5, 6, 7, 8 und 9 zueinander auf einen Wert, der kleiner als die halbe Wellenlänge der von den einzelnen in Fig. 1 nicht dargestellten Funkstationen ausgestrahlten Wellen ist, wie im Falle der Vorrichtung des Stands der Technik, ist bei der erfindungsgemäßen Vorrichtung zur gleichzeitigen Funkpeilung mehrerer örtlich verteilter Funkstationen nicht mehr gegeben.

Die von den einzelnen Antennen 1, 2, 3, 4, 5, 6, 7, 8 und 9 erfaßten Amplitudenwerte der empfangenen Gesamtwelle, die sich aus der Überlagerung der von jeder einzelnen örtlich verteilten Funkstation ausgestrahlten Welle ergibt, werden mehreren Schaltvorrichtungen 11 und 11' zugeführt. Die Anzahl H der Schaltvorrichtungen 11 und 11' entspricht der maximalen Anzahl H von Antennen in jeder der Antennen-Untergruppen 1', 2', 3' und 4'. In der in Fig. 1 beispielhaft dargestellten Anordnung 10 der Antennen mit jeweils drei Antennen je Antennen-Untergruppe 1', 2', 3'und 4' müßten demnach insgesamt drei Schaltvorrichtungen 11, 11' und 11" vorgesehen sein. Über die Schaltvorrichtungen 11 und 11' werden im Takt der Abtastrate die empfangenen Amplitudenwerte der zu einer Antennen-Untergruppe 1', 2', 3'und 4' jeweils gehörigen Antennen 1, 2, 3, 4, 5, 6, 7, 8 und 9 taktsynchron und gleichzeitig an den Ausgang der jeweiligen Schaltvorrichtung 11, 11' und 11" durchgeschaltet. Da die Antenne 1 aber in der beispielhaften Anordnung 10 in jeder der vier Antennen-Untergruppe 1', 2', 3' und 4'enthalten ist und somit deren empfangener Pegelwert zu jedem Taktzyklus weitergeschaltet werden muß, entfällt die dritte Schaltvorrichtung 11" und der Pegelwert der Antenne 1 wird direkt weitergeschaltet.

Die Ausgänge der einzelnen Schaltvorrichtungen 11 und 11' sowie der Antenne 1 werden mit zugeordneten Meßkanälen (MK1, MK2, MK3) 12, 12' und 12" verbunden. Die Anzahl H der Meßkanäle 12, 12' und 12" entspricht der maximalen Anzahl H von Antennen je Antennen-Untergruppe 1', 2', 3' und 4'. Die den einzelnen Meßkanälen 12, 12' und 12" der erfindungsgemäßen Vorrichtung zugeführten Amplitudenwerte der von den einzelnen Antennen 1, 2, 3, 4, 5, 6, 7, 8 und 9 empfangenen Gesamtwelle werden in zugeordneten Bandpaß-Filtern 13, 13' und 13" gefiltert und über zugeordnete Analog-Digital-Wandler 14, 14' und 14" in ein digitales Datenformat gewandelt, das den Real- und Imaginärteil der Amplitudenwerte geeignet darstellt.

Die digital gewandelten Amplitudenwerte der Gesamtwelle, die von den einzelnen Antennen 1, 2, 3, 4, 5, 6, 7, 8 und 9 empfangen und den insgesamt H Meßkanälen 12, 12' und 12" zugeführt werden, werden innerhalb einer Verarbeitungseinheit 15 von einer Binär-Eingabe-Einheit 16 eingelesen. Die Verarbeitungs-Einheit 15 enthält zusätzlich eine Speicher-Einheit 17, in der einerseits die aus den einzelnen empfangenen Amplitudenwerte gebildeten Meßmatrizen $X_i$ und andererseits die zu den einzelnen Antennen-Untergruppen 1', 2', 3' und 4' gehörigen Richtungsvektoren $a_i(\Theta)$ abgespeichert sind. Aus den einzelnen Meßmatrizen $X_i$ und den einzelnen Richtungsvektoren $a_i(\Theta)$ werden von einer der Verarbeitungs-Einheit 15 angehörenden Prozessor-Einheit 18 für jede der P Antennen-Untergruppen 1', 2', 3'und 4' die zugehörenden Suchfunktionen $P_i(\Theta)$, die Gesamt-Suchfunktion $P(\Theta)$ und die gesuchten Peilwerte $\Theta_1, \Theta_2,...,\Theta_N$ der anzupeilenden N Funkstationen bestimmt.

In einer an die Verarbeitungs-Einheit 15 angeschlossenen Anzeige-Einrichtung 19 werden die zu den P Antennen-Untergruppen 1', 2', 3'und 4' gehörenden Suchfunktionen $P_i(\Theta)$, die Gesamt-Suchfunktion $P(\Theta)$ und die gesuchten Peilwerte $\Theta_1, \Theta_2,...,\Theta_N$ der anzupeilenden N Funkstationen grafisch dargestellt.

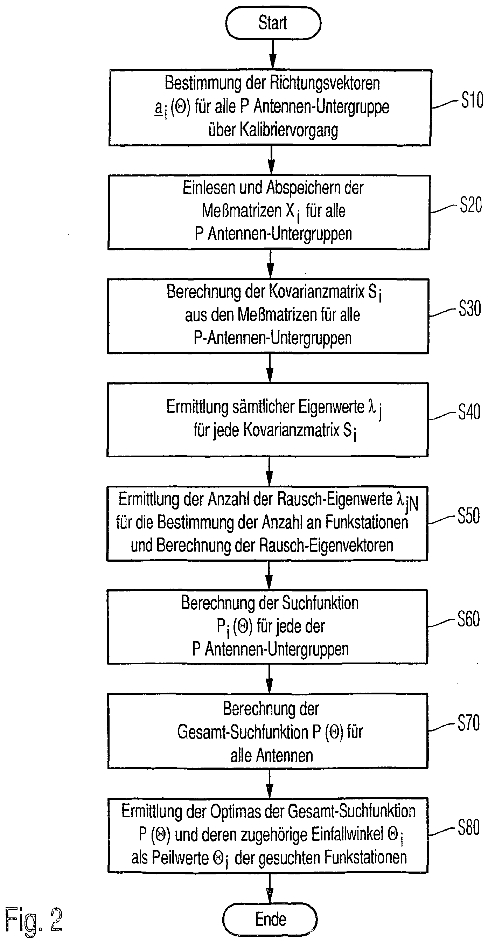

Bevor auf das erfindungsgemäße Verfahren zur gleichzeitigen Funkpeilung mehrerer örtlich verteilter Funkstationen in Fig. 2 näher eingegangen wird, werden die mathematischen Grundlagen der gleichzeitigen Funkpeilung mehrerer einfallender Wellen im folgenden hergeleitet:

Für eine Anordnung von M örtlich verteilten Antennen, beispielweise die Anordnung 10 von Antennen 1, 2, 3, 4, 5, 6, 7, 8 und 9 in Fig. 1, wird beispielsweise Antenne 1 zur Bezugsantenne definiert. In einem an der Position der Bezugsantenne festgelegten Koordinatensystem weisen die übrigen M-1 Antenne eine durch die jeweiligen Koordinaten $x_i$ und $y_i$ im Koordinatensystem beschriebene Position auf. Unter der Annahme, daß die Entfernung einer k-ten Funkstation zu jeder der Antennen in Relation zu den relativen Abständen der einzelnen Antennen zueinander vergleichsweise groß ist, kann angenommen werden, daß der Einfallswinkel $\Theta_k$ der von der k-ten Funkstation ausgestrahlten Welle bei allen Antennen der Anordnung der gleiche ist und von der positiven x-Achse des in der Bezugsantenne festgelegten Koordinatensystems im Uhrzeigersinn gemessen wird.

Für die Entfernung $d_{ik}$ einer Antenne i zum Koordinatensystem-Ursprung entlang des Welleneinfallswinkels $\Theta_k$ gilt die Beziehung in Gleichung (1):

$$d_{ik} = x_i * \cos\Theta_k + y_i * \sin\Theta_k \qquad (1)$$

Für die Entfernung $d_{lk}$ der Bezugsantenne zum Koordinatensystem-Ursprung gilt demnach $d_{lk}=0$.

Die Phasendifferenz $\Delta\phi_{ik}$ zwischen der von Antenne i empfangenen Gesamtwelle und der von Bezugsantenne 1 empfangenen Gesamtwelle ergibt sich bei einem Einfallswinkel $\Theta_k$ der Gesamtwelle und bei komplexer Schreibweise aus Gleichung (2):

$$\Delta\phi_{ik} = \exp(-j*2*\pi*d_{ik}/\lambda) \qquad (2)$$

Unter der Voraussetzung einer drehwinkelunbabhängigen Richtcharakteristik jeder Antenne ergibt sich aus den Phasendifferenzen $\Delta\phi_{ik}$ jeder Antenne der Antennen-Anordnung der Richtungsvektor $\underline{a}(\Theta_k)$ gemäß Gleichung (3):

$$a(\Theta_k) = (1, a_2(\Theta_k),...,a_M(\Theta_k)) =$$
$$= (\Delta\phi_{1k}, \Delta\phi_{2k},..., \Delta\phi_{Mk}) \qquad (3)$$

Werden im folgenden insgesamt N örtlich verteilte Funkstationen angenommen und kann die von der k-ten Funkstation ausgestrahlte Welle durch die Zeitfunktion $f_k(t)$ beschrieben werden, so ergibt sich für den Empfangsvektor $\underline{x}(t)$ der durch jede der insgesamt M Antennen der Antennen-Anordnung empfangenen Gesamtwelle gemäß Gleichung (4) folgender Zusammenhang:

$$x(t) = (x_1(t), x_2(t), \ldots, X_M(t)) =$$
$$= \sum_{k=1}^{N} f_k(t) * \underline{a}(\Theta_k) + \underline{n}(t) \qquad (4)$$

Im Vektor $\underline{n}(t)$ sind alle Rauschsignale $n_i(t)$ enthalten, die den Amplitudenwerten der von jeder Antenne i der Antennen-Anordnung empfangenen Gesamtwelle überlagert ist.

Da das Gleichungssystem in (4) stark nicht-linearen Charakter aufweist, ist die Bestimmung des Peilvektors $\underline{\Theta} = (\Theta_1, \Theta_2, \ldots, \Theta_k, \ldots, \Theta_N)$ auf analytischem Weg nicht möglich. Einzig gangbar ist eine numerische Herangehensweise, bei der auf der Basis eines Optimierungskriteriums eine Suchfunktion bestimmt wird, deren Extrema zum gesuchten Peilvektor $\underline{\Theta}$ führen.

Erschwerend kommt hinzu, daß durch die Wahl der Anzahl von Antennen und insbesondere deren geometrische Position in Relation zur Anzahl der Funkstationen und insbesondere deren geometrische Positionen die räumliche Abtastung durch die Antennen-Anordnung in zweifacher Hinsicht problematisch wird.

Erstens führt die jeweilige geometrische Antennen-Anordnung bei bestimmten Einfallswinkeln $\Theta_k$ und $\Theta_l$ der Funkstationen gemäß Gleichung (5) zu identischen bzw. näherungsweise identischen Richtungsvektoren $\underline{a}(\Theta)$.

$$a(\Theta_k) = /\approx a(\Theta_1) \qquad (5)$$

Diese identischen bzw. näherungsweise identischen Richtungsvektoren $\underline{a}(\Theta)$ bilden unerwünschte Mehrdeutigkeiten in der Suchfunktion, welche bei der Bestimmung des Peilvektors $\underline{\Theta}$ hinderlich sind.

Zweitens führt die Überlagerung von Rauschen zum Empfangssignal der Antennen-Anordnung insbesondere bei nahe beieinander liegenden Einfallswinkeln $\Theta_k$ und $\Theta_{k+1}$ zweier Funkstationen k und k+1 zu fehlender Eindeutigkeit bei der getrennten Identifizierung der beiden Peilwerte $\Theta_k$ und $\Theta_{k+1}$.

Während zweitere Problematik algorithmisch im Rahmen der Bestimmung der Suchfunktion gelöst wird, wie weiter unten noch im Detail gezeigt wird, läßt sich das erstere Problem durch geeignete Konstruktion der Antennen-Anordnung lösen.

Hierzu sind nach Kah-Chye Tan et al.: "A Study of the Rank-Ambiguity Issues in Direction-of-Arrival Estimation", IEEE Transactions on Signal Processing, Vol. 44, No. 4, April 1996, Seite 880 - 887, Antennen-Anordnungen zu konstruieren, deren Richtungsvektoren $\underline{a}(\Theta_k)$ für alle möglichen Einfallswinkel $\Theta_k$ - $-\pi < \Theta_k < \pi$ - zueinander linear unabhängige Vektoren bilden. Da die lineare Unabhängigkeit der Richtungsvektoren $\underline{a}(\Theta_k)$ für alle möglichen Einfallswinkel $\Theta_k$ bei einer Vielzahl von Antennen in der realen Praxis eine extrem hohe technische Herausforderung darstellt, wird dieses Konstruktionsproblem erfindungsgemäß dadurch deutlich vereinfacht, indem die Anordnung aller Antennen in mehrere Antennen-Untergruppen zerlegt wird. Durch Anwendung der obigen Konstruktionsvorschrift für die Positionierung der Antennen innerhalb der Antennen-Untergruppen sowie der Antennen-Untergruppen zueinander läßt sich erfindungsgemäß ein von Mehrdeutigkeiten befreiter Lösungsraum zur Bestimmung des Peilvektors $\underline{\Theta}$ realisieren, der konstruktiv deutlich handhabbarer verwirklicht werden kann als eine auf einer Gesamt-Anordnung aller Antennen basierende Vorgehensweise.

Im Hinblick auf die im folgenden durchzuführende Betrachtungsweise auf der Ebene der Antennen-Untergruppen werden die Größen der Gleichung (4), welche sich auf die gesamte Antennen-Anordnung beziehen, auf Größen mit Bezug zu Antennen-Untergruppen umgesetzt:

Die Empfangssignale $x_i(t)$ jeder Antenne werden in den einzelnen Analog-Digital-Wandlern 14, 14' und 14" der einzelnen Meßkanäle 12, 12' und 12" abgetastet und anschließend in der Verarbeitungs-Einheit 15 auf mehrere den einzelnen Antennen-Untergruppen zugeordnete Empfangsvektoren $\underline{x}_i(t)$ aufgeteilt. Die Meßmatrix $X_i$, welche alle Empfangsvektoren $\underline{x}(t)$ zu allen Abtastzeitpunkten enthält ergibt sich gemäß Gleichung (6):

$$X_i = (\underline{x}(t=1), \underline{x}(t=2), \ldots, \underline{x}(t=T)) \qquad (6)$$

Die Meßmatrix X setzt sich wiederum gemäß Gleichung (7) aus allen Meßmatrizen $X_i$, die jeweils einer Antennen-Untergruppe i zugeordnet sind, zusammen.

$$X = (X_1, X_2, \ldots, X_i, \ldots, X_P) \qquad (7)$$

Analog zur Vorgehensweise beim Meßvektor $x(t)$ werden die Elemente des Richtungsvektors $\underline{a}(\Theta_k)$ auf Rich-

tungsvektoren $\underline{a}_i(\Theta_k)$ aufgeteilt, die jeweils jeder der Antennen-Untergruppen i zugeordnet sind. Nach Gleichung (7) ergibt sich der Zusammenhang zwischen dem alle Antennen umfassenden Richtungsvektor $\underline{a}(\Theta_k)$ und den einzelnen den Antennen-Untergruppen zugeordneten Richtungsvektoren $\underline{a}_i(\Theta_k)$:

$$\underline{a}(\Theta_k) = (\underline{a}_1(\Theta_k), \underline{a}_2(\Theta_k), \ldots, \underline{a}_i(\Theta_k), \ldots, \underline{a}_P(\Theta_k)) \qquad (7)$$

Der eigentliche Erfindungsgedanke der erfindungsgemäßen Vorrichtung und des erfindungsgemäßen Verfahrens zur gleichzeitigen Funkpeilung mehrerer örtlich verteilter Funkstationen besteht nun darin, daß für die Anordnung der Antennen innerhalb einer Antennen-Untergruppe keine Beschränkungen im Hinblick auf parallele Richtungsvektoren $\underline{a}_i(\Theta_k)$ für verschiedene Einfallswinkel $\Theta_k$ und $\Theta_{k+1}$ der Gesamtwelle zu berücksichtigen sind. Mehrdeutigkeiten bei den Richtungsvektoren innerhalb einer Antennen-Untergruppe i sind gemäß Gleichung (8) erlaubt.

$$\underline{a}_i(\Theta_k) = \underline{a}_i(\Theta_{k+1}) \qquad \text{für alle } i = 1 \text{ bis } P$$
$$(8)$$

Eine Suchfunktion zur Ermittlung des Peilvektors $\underline{\Theta}$, die für eine einzige Antennen-Untergruppe i bestimmt wird, kann folglich durchaus eine größere Anzahl an Extrema aufweisen, als Peilwerte $\Theta_i$ innerhalb des gesuchten Peilvektors $\underline{\Theta}$ enthalten sind.

Entscheidend ist vielmehr im Sinne des Erfindungsgedanken, daß die Richtungsvektoren $\underline{a}_i(\Theta_k)$, die den einzelnen Antennen-Untergruppen i zugeordnet sind, für alle Einfallswinkel $\Theta_k$ der Gesamtwelle zueinander paarweise linear unabhängige Vektoren sind, so daß für die Faktoren $\alpha_1$ und $\alpha_2$ Werte ungleich Null ausgeschlossen werden können, damit die Bedingungsgleichung (9) der paarweisen linearen Unabhängigkeit von Richtungsvektoren erfüllt ist.

$$\alpha_1 * \underline{a}_i(\Theta_k) + \alpha_2 * \underline{a}_{i+1}(\Theta_k) \neq \underline{0} \quad \text{für alle } i = 1 \text{ bis } P \qquad (9)$$

Gleichung (9) ist für alle Anordnungen von Antennen innerhalb zweier Antennen-Untergruppen i und i+1 erfüllt, deren Richtungsvektoren $\underline{a}_i(\Theta_k)$ und $\underline{a}_{i+1}(\Theta_k)$ für alle Einfallswinkel $\Theta_k$ nicht-parallel zueinander ausgerichtet sind. Antennen-Untergruppen, deren Richtungsvektoren $\underline{a}_i(\Theta_k)$ und $\underline{a}_{i+1}(\Theta_k)$ Gleichung (9) erfüllen, können für sich betrachtet gemäß Gleichung (8) für unterschiedliche Einfallswinkel $\Theta_k$ Mehrdeutigkeiten aufweisen, deren Lage aber im Hinblick auf Erfüllung von Gleichung (9) unterschiedlich sein muß. Diese Mehrdeutigkeiten der einzelnen Richtungsvektoren $\underline{a}_i(\Theta_k)$ und $\underline{a}_{i+1}(\Theta_k)$, die für die jeweiligen Antennen-Untergruppen i und i+1 bei unterschiedlichen Einfallswinkeln $\Theta_k$ zwingend zu liegen kommen müssen, werden durch das weiter unten dargestellte erfindungsgemäße Verfahren zur gleichzeitigen Funkpeilung mehrerer örtlich verteilter Funkstationen im Hinblick auf eine damit zu entwickelnde Gesamt-Suchfunktion beseitigt.

Die wesentlich stringentere Bedingung der vollständigen linearen Unabhängigkeit der Richtungsvektoren aller Antennen-Untergruppen im Sinne von Gleichung (10) ist nicht erforderlich, da die je Richtungsvektor $\underline{a}_i(\Theta_k)$ vorliegenden Mehrdeutigkeiten jeweils bei unterschiedlichen Einfallswinkeln $\Theta_k$ pro Richtungsvektor-Paar $\underline{a}_i(\Theta_k)$ und $\underline{a}_{i+1}(\Theta_k)$ zu liegen kommen und somit auch in Summe über alle Richtungsvektoren $\underline{a}_i(\Theta_k)$ bei unterschiedlichen Einfallswinkeln $\Theta_k$ zu liegen kommen.

$$\sum_{i=1}^{P} \alpha_i * \underline{a}_i(\Theta_k) \neq \underline{0} \qquad (10)$$

Diese an unterschiedlichen Einfallswinkeln $\Theta_k$ zu liegen kommenden Mehrdeutigkeiten werden, wie weiter unten gezeigt wird, durch das erfindungsgemäße Verfahren beseitigt.

Auf der Basis der vorangegangenen mathematischen Herleitungen wird im folgenden das erfindungsgemäße Verfahren zur gleichzeitigen Funkpeilung mehrerer örtlich verteilter Funkstationen in Fig. 2 beschrieben.

Für die Bestimmung der Suchfunktion wird beispielhaft der MUSIC-Algorithmus - Multiple-Signal-Classification-Algorithmus - herangezogen. Alternativ können aber auch andere, weiter unten noch kurz dargestellte Schätz-Verfahren benutzt werden.

In Verfahrensschritt S10 des erfindungsgemäßen Verfahrens werden für jede der insgesamt P Antennen-Untergruppen die zugehörigen Richtungsvektor $\underline{a}_i(\Theta)$ bestimmt. Hierzu werden in der Praxis für eine bestimmte Einfallswinkelrasterung $\Theta_k$ gemäß der Beziehungen (1), (2) und (3) die Werte der Elemente $a_{ij}(\Theta_k)$ der einzelnen Richtungsvektoren $\underline{a}_i(\Theta_k)=(a_{i1}(\Theta_k),a_{i2}(\Theta_k),..,a_{ij}(\Theta_k),..,a_{iH}(\Theta_k))$, die zur jeweiligen Antenne j der Antennn-Untergruppe i gehört, im Rahmen einer Kalibriermessung ermittelt. Diese einzelnen Richtungsvektoren $\underline{a}_i(\Theta_k)$ werden in der Speicher-Einheit 17 der Verarbeitungs-Einheit 15 für die weitere Verarbeitung im erfindungsgemäßen Verfahren abgespeichert.

Im darauffolgenden Verfahrensschritt S20 werden die zu den einzelnen Abtastzeitpunkten t von den insgesamt M Antennen empfangenen Amplitudenwerte $x_i(t)$ einer Gesamtwelle, die sich aus von insgesamt N Funkstationen ausgestrahlten und sich überlagernden Einzelwellen ergibt, über insgesamt H Meßkanäle 12, 12' und 12" eingelesen und in Meßmatrizen $X_i$ im Speicher 17 der Verarbeitungs-Einheit 15 abgelegt, die jeweils für eine Antennen-Untergruppe i gebildet wird. Die jeweiligen Meßmatrizen $X_i$ weisen gemäß Gleichung (11) entsprechend der maximalen Anzahl H von Antennen je Antennnen-Untergruppe insgesamt H Zeilen und entsprechend der T Abtastzeitpunkte T Spalten auf.

$$X_i = \begin{bmatrix} x_1(t=1) & .. & x_1(t=T) \\ : & : & : \\ x_H(t=1) & .. & x_H(t=T) \end{bmatrix} \qquad (11)$$

Aus den jeweils für jede Antennen-Untergruppe i abgespeicherten $X_i$ werden im darauffolgenden Verfahrensschritt S30 die Kovarianzmatrizen $S_i$ berechnet, indem die jeweilige Meßmatrix $X_i$ mit der transjugierten Meßmatrix $X_i^*$ über eine Matrizenmultiplikation gemäß Gleichung (12) verknüpft wird.

$$S_i = X_i \bullet X_i^* \qquad (12)$$

Die Kovarianzmatrizen $S_i$ weisen jeweils den Rang H auf.

Im darauffolgenden Verfahrensschritt S40 werden nach bekannten mathematischen Verfahren die jeweils H Eigenwerte $\lambda_j$ jeder Kovarianzmatrix $S_i$ ermittelt.

Der darauffolgende Verfahrensschritt S50 beinhaltet die Separierung der Eigenwerte $\lambda_j$ aller Kovarianzmatrizen $S_i$ in Eigenwerte $\lambda_{jN}$, die dem Rauschsignal n(t) zugeordnet sind, und in Eigenwerten $\lambda_{js}$, die dem Empfangssignal f(t) zugeordnet sind.

Nach R.O. Schmidt: "Multiple Emitter Location and Signal Parameter Estimation" in IEEE Transactions on Antennas and Propagation, Vol. AP-34, No. 3, März 1986, Seite 276 - 280, kann Gleichung (4) bei Betrachtung mehrerer Abtastzeitpunkte k in Gleichung (13) übergeführt werden:

$$X = A \bullet F + N \qquad (13)$$

Dabei enthält die Matrix X entsprechend der insgesamt N Antennen die N-dimensionalen Empfangsvektoren $\underline{x}(k)$ der Meßmatrix zu den k Abtastzeitpunkten nach Gleichung (6). Die Matrix A enthält in ihren Spalten die Richtungsvektoren $\underline{a}(\Theta_k)$ zu den einzelnen Einfallswinkelrasterpunkten $\Theta_k$. Die Matrix F enthält in ihren Spalten analog zur Matrix X die jeweils N-dimensionalen Vektoren f(t) mit den von den N Funkstationen ausgestrahlten Zeitfunktionen $f_k(t)$ zu den einzelnen Abtastzeitpunkten t. Die Matrix N enthält ebenfalls in ihren Spalten die N-dimensionalen Rauschvektoren n(t) zu den einzelnen Abtastzeitpunkten t. Für die Kovarianzmatrix S bei Betrachtung aller insgesamt M Antennen ergibt sich auf der Basis von Gleichung (13) die Beziehung in Gleichung (14):

$$S = X \bullet X^* = A \bullet F \bullet F^* \bullet A^* + N \bullet N^* \qquad (14)$$

Mittels Substitution des Matrixprodukts F • F* durch die Hilfmatrix P und Zerlegung des Matrixprodukts N • N* in die zugehörigen Eigenwerte $\lambda_{jN}$ ergibt sich aus Gleichung (14) die neue Beziehung für die Kovarianzmatrix S in Gleichung (15):

$$S = A \bullet P \bullet A^* + \lambda_{jN} \bullet S_0 \qquad (15)$$

Da der Rang der Matrix S mit M, der Anzahl der Antennen, größer als der Rang der Matrix A • P • A* mit N, der Anzahl der Funkstationen, ist, müssen die Determinanten entsprechend Gleichung (16) Null werden.

$$\left| A \bullet P \bullet A^* \right| = \left| S - \lambda_{jN} \bullet S_0 \right| = 0 \qquad (16)$$

Folglich müssen die Rausch-Eigenwerte $\lambda_{jN}$ identisch zu einigen Eigenwerten $\lambda_i$, insbesondere zu den minimalen Eigenwerten $\lambda_{min}$, der Kovarianzmatrix S sein.

Die Anzahl D der minimalen Eigenwerte $\lambda_{min}$ der Kovarianzmatrix S, die im allgemeinen in einem engen Bereich konzentriert sind und einen deutlichen Abstand zu den übrigen Eigenwerten aufweisen, stellen somit die Differenz zwischen dem Rang M der Kovarianzmatrix S und dem Rang N der Matrix A • P • A* dar. Bei bekannten Rang M der Kovarianzmatrix S können durch Ermittlung der Anzahl D der minimaler Eigenwerte $\lambda_{min}$ der Kovarianzmatrix S gemäß Gleichung (17) die zunächst unbekannte Anzahl N der Funkstationen ermittelt werden.

$$N = M - D \qquad\qquad (17)$$

Die Anzahl D der minimalen Eigenwerte $\lambda_{min}$ der Konvarianzmatrix S wird erfindungsgemäß dadurch ermittelt, daß die in Verfahrensschritt S40 für jede Kovarianzmatrix $S_i$ jeweils ermittelten Eigenwerte $\lambda_j$ in einem Histogramm aufgetragen werden. Die daraus abgeleitete gesamte Anzahl D der minimalen Eigenwerte $\lambda_{min}$ wird in Analogie zu Gleichung (17) bei Betrachtung aller M Antennen für die Berechnung der gesuchten Anzahl N der Funkstationen bei Betrachtung von H Antennen je Antennen-Untergruppe gemäß Gleichung (18) herangezogen.

$$N = H - int(D/P) \qquad\qquad (18)$$

Der Operator int(..) rundet den Operanden D/P zu einer Ganzzahl ab. In Verfahrensschritt S50 werden zusätzlich für die insgesamt D Rausch-Eigenwerte $\lambda_{jN}$ nach bekannten mathematischen Verfahren die zugehörigen Rausch-Eigenvektoren $\underline{e}_{jN}$ für jede Untergruppe berechnet und zu den Rausch-Eigenmatrizen $E_N$ gemäß Gleichung (19) zusammengefaßt werden.

$$E_{Ni} = (\underline{e}_{1N}, \underline{e}_{2N}, \ldots, \underline{e}_{DN})_i \qquad (19)$$

Für die Eigenwerte $\lambda_i$ und die dazugehörigen Eigenvektoren $\underline{e}_i$ der Kovarianzmatrix S gilt die in Gleichung (20) dargestellte Eigenwert-Zerlegung der Kovarianzmatrix S:

$$S \bullet \underline{e}_i = \lambda_i \bullet S_0 \bullet \underline{e}_i \qquad\qquad (20)$$

Gleichung (20) in die Beziehung von Gleichung (15) eingesetzt, ergibt Gleichung (21):

$$A \bullet P \bullet A* \bullet \underline{e}_i = (\lambda_i - \lambda_{min}) \bullet S_0 \bullet \underline{e}_i \qquad (21)$$

Für alle Eigenwerte $\lambda_i$ der Kovarianzmatrix S, die den Rausch-Eigenwerten $\lambda_{jN}$ ($\lambda_{jN}=\lambda_{min}$) entsprechen, ist die Differenz $\lambda_i-\lambda_{min}$ Null, so daß nach Gleichung (22) die zugehörigen Eigenvektoren $\underline{e}_{jN}$ senkrecht auf dem Unterraum, der durch die Spaltenvektoren - die Richtungsvektoren $\underline{a}(\Theta_k)$ zu einzelnen Einfallswinkeln $\Theta_k$ der Funkstationen k - der Matrix A gebildet wird, stehen.

$$A \bullet P \bullet A* \bullet \underline{e}_{jN} = A* \bullet \underline{e}_{jN} = \underline{0} \qquad (22)$$

Auf diese Weise ist ein Kriterium zur Bestimmung der Peilwerte $\Theta_k$ der gesuchten Funkstationen gegeben.

In Verfahrensschritt S60 wird für jede Antennen-Untergruppe auf der Basis der Rausch-Eigenmatrizen $E_N$ aus Gleichung (19), die im vorhergehenden Verfahrensschritt S50 ermittelt werden, und dem in Verfahrensschritt S10 für jede Antennen-Untergruppe i ermittelten Richtungsvektor $\underline{a}_i(\Theta)$ die Suchfunktion $P_i(\Theta)$ gemäß Gleichung (23) ermittelt:

$$P_i(\Theta) = \frac{1}{\underline{a}_i*(\Theta) \bullet E_{Ni} \bullet E_{Ni}* \bullet \underline{a}_i(\Theta)} \qquad (23)$$

Bei Einfallswinkeln $\Theta_k$ der Gesamtwelle überlagert sich zum Empfangssignal das Rauschsignal, so daß bei diesen Einfallswinkeln $\Theta_k$ die Skalarprodukte des Richtungsvektors $\underline{a}_i(\Theta_k)$ mit den Rauscheigenvektor $\underline{e}_{jN}$ Null sind und damit die Suchfunktion $P_i(\Theta)$ bei diesen Einfallswinkeln $\Theta_k$ Extrema aufweist.

Im nächsten Verfahrensschritt S70 werden alle zu den jeweiligen Antennen-Untergruppen i gehörigen Suchfunktionen $P_i(\Theta)$ gemäß Gleichung (24) multiplikativ zur Bildung der Gesamt-Suchfunktion $P(\Theta)$, welche für alle Antennen gilt, verknüpft:

$$P(\Theta) = \prod_{i=1}^{P} P_i(\Theta) \qquad (24)$$

Die multiplikative Verknüfung der einzelnen Suchfunktionen stellt eine Mittelungsfunktion dar, welche die an unterschiedlichen Einfallswinkeln $\Theta_k$ liegenden Mehrdeutigkeiten der einzelnen Suchfunktionen $P_i(\Theta)$ "ausmittelt" und dadurch aus der Gesamt-Suchfunktion $P(\Theta)$ beseitigt.

Werden die einzelnen Suchfunktionen $P_i(\Theta)$ im logarithmischen Maßstab dargestellt, so ergibt sich die Gesamt-Suchfunktion $P(\Theta)$ im logarithmischen Maßstab gemäß Gleichung (26) aus der Addition der logarithmisch dargestellten Einzel-Suchfunktionen $P_i(\Theta)$.

$$\log P(\Theta) = \sum_{i=1}^{P} \log P_i(\Theta) \qquad (26)$$

Im letzten Verfahrensschritt S80 werden die N höchsten Extrema der von Mehrdeutigkeiten befreiten Gesamt-Suchfunktion $P(\Theta)$ über einen Vergleich mit einem festgelegten Schwellwert ermittelt. Die zu den damit gefundenen N höchsten Extrema gehörigen Einfallswinkel $\Theta_1$ bis $\Theta_N$ stellen die Peilwerte $\Theta_1$ bis $\Theta_N$ der gesuchten Funkstationen als Elemente des gesuchten Peilvektors $\underline{\Theta}$ dar.

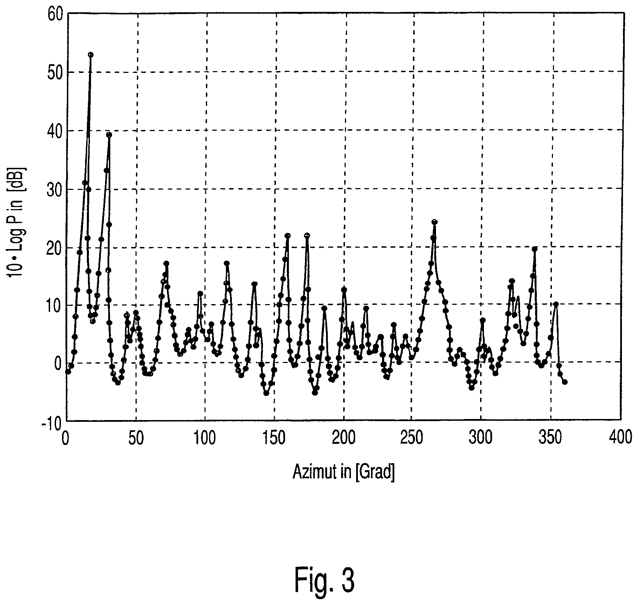

Fig. 3 stellt den graphischen Verlauf einer nach dem erfindungsgemäßen Verfahren in Fig. 2 ermittelten Gesamt-Suchfunktion $P(\Theta)$ dar. Zu erkennen sind die beiden Einfallswinkel $\Theta_1$ bei 10° und $\Theta_2$ bei 25° der beiden Wellen mit den jeweiligen Amplitudenwerten 1 bzw. 0,5. Bei der Antennen-Anordnung handelt es sich um eine kreisförmige Anordnung der Antennen gemäß Fig. 1 mit einem Kreisdurchmesser bezogen auf die Wellenlänge $\lambda$ der Gesamtwelle von vier. Zur Bildung der Meß- bzw. Kovarianzmatrizen X bzw. S wurden insgesamt 10 Abtastzyklen durchgeführt. Der Signal-Rausch-Abstand beträgt 20dB.

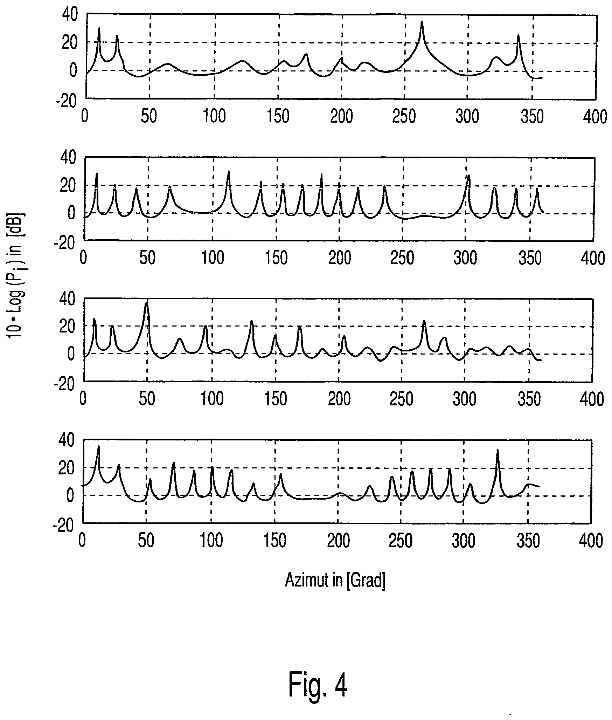

Im Vergleich dazu sind in Fig. 4 die graphischen Verläufe der einzelnen Suchfunktionen $P_1(\Theta)$ bis $P_4(\Theta)$ dargestellt, die zu den vier Antennen-Untergruppen der gleichen Antennen-Anordnung gehören. Zu erkennen sind in den einzelnen Suchfunktions-Verläufen die an unterschiedlichen Einfallswinkeln $\Theta_k$ auftretenden Mehrdeutigkeiten.

Alternativ zur Suchfunktion in Gleichung (23), die auf dem MUSIC-Algorithmus beruht, können in dem erfindungsgemäßen Verfahren zur gleichzeitigen Funkpeilung mehrerer örtlich verteilter Funkstationen auch andere Suchfunktionen verwendet werden, die auf anderen Schätzverfahren beruhen.

Diese werden im folgenden nur kurz vorgestellt, ohne auf deren mathematische Herleitung und deren Stärken bzw. Schwächen in der Anwendung im Detail einzugehen. Diesbezüglich sei auf die reichlich vorhandene Fachliteratur hingewiesen.

Beim Schätzverfahren nach dem konventionellen Richtstrahlbildungs-Verfahren - Beamforming-Verfahren nach Capon - werden in der Suchfunktion $P_i(\Theta)$ gemäß Gleichung (27) anstelle der Korrelationsmatrix der Rauscheigenmatrizen $E_N^* \cdot E_N$ des MUSIC-Algorithmuses die Kovarianzmatrix $S_i$ benutzt.

$$P_i(\Theta) = \frac{1}{\underline{a}_i(\Theta)^* \cdot S_i \cdot \underline{a}_i(\Theta)} \qquad (27)$$

Der mathematische Ausdruck der Suchfunktion $P_i(\Theta)$ in Gleichung (27) entspricht der einer Richtantenne mit mehreren Antennen-Elemente, deren Empfangssignale für Welleneinfallswinkel $\Theta$ konstruktiv überlagert, d.h. gleichphasig addiert werden.

Beim Schätzverfahren nach dem Maximum-Likelihood-Verfahren nach Capon wird die Korrelationsmatrix der Rauscheigenmatrizen $E_N^* \cdot E_N$ des MUSIC-Algorithmuses gemäß Gleichung (28) durch die inverse Kovarianzmatrix $S_i^{-1}$ ersetzt.

$$P_i(\Theta) = \frac{1}{\underline{a}_i(\Theta)^* \bullet S_i^{-1} \bullet \underline{a}_i(\Theta)} \qquad (28)$$

Beim Schätzverfahren nach dem Maximum-Entropie-Algorithmus nach Burg wird die Korrelationsmatrix der Rauscheigenmatrizen $E_N^* \bullet E_N$ des MUSIC-Algorithmuses gemäß Gleichung (29) durch das dyadische Produkt aus den Spaltenvektoren $\underline{c}_i$ und $\underline{c}_i^*$ der Kovarianzmatrix $S_i$ ersetzt.

$$P_i(\Theta) = \frac{1}{\underline{a}_i(\Theta)^* \bullet \underline{c}_i \bullet \underline{c}_i^* \bullet \underline{a}_i(\Theta)} \qquad (29)$$

Beim Minimum-Norm-Schätzverfahren wird die Korrelationsmatrix der Rauscheigenmatrizen $E_N^* \bullet E_N$ des MUSIC-Algorithmuses gemäß Gleichung (30) durch jene Rauscheigenvektoren $\underline{d}_i$ und $\underline{d}_i^*$ ersetzt, die die minimale euklidische Norm besitzen.

$$P_i(\Theta) = \frac{1}{\underline{a}_i(\Theta)^* \bullet \underline{d}_i \bullet \underline{d}_i^* \bullet \underline{a}_i(\Theta)}$$

$$(30)$$

Die Erfindung ist nicht auf die dargestellte Ausführungsform beschränkt. Insbesondere sind sind parametrische Schätzverfahren zur Bildung der Suchfunktion, beispielsweise der Maximum-Likelihood-Algorithmus von der Erfindung abgedeckt.

**Patentansprüche**

1. Verfahren zur gleichzeitigen Funkpeilung von N örtlich verteilten Funkstationen über M örtlich verteilte Antennen (1, 2, 3, 4, 5, 6, 7, 8, 9), die P Antennen-Untergruppen (1', 2', 3', 4') mit jeweils mindestens 3 bis zu H Antennen (1, 2, 3, 4, 5, 6, 7, 8, 9) zugeordnet sind, wobei aus Amplitudenwerten einer aus von den Funkstationen ausgestrahlten und sich überlagernden Einzelwellen bestehenden Gesamtwelle, die jeweils von jeder Antenne (1, 2, 3, 4, 5, 6, 7, 8, 9) einer Antennen-Untergruppe (1', 2', 3', 4') gemessen werden, und aus einfallswinkelabhängigen Richtungsvektoren $\underline{a}_i(\Theta)$, die jeweils für jede Antennen-Untergruppe (1', 2', 3', 4') ermittelt werden, für jede Antennen-Untergruppe i (1', 2', 3', 4') über einen numerischen Algorithmus einfallswinkelabhängige Suchfunktionen ($P_i(\Theta)$) entwickelt werden,
wobei die Extrema der Suchfunktionen ($P_i(\Theta)$) Lösungen für die Richtungen der gesuchten Funkstationen darstellen und wobei die komplexwertigen Werte der Elemente der einzelnen Richtungsvektoren $\underline{a}_i(\Theta)$ für die jeweilige Antenne die jeweilige Phasendifferenz zwischen der von der entsprechenden Antenne empfangenen ebenen Welle zur von einer Bezugsantenne empfangenen Welle in der Einfallsrichtung der empfangenen Gesamtwelle beschreiben,
**dadurch gekennzeichnet,**
**daß** aus allen zu jeder Antennen-Untergruppe (1', 2', 3', 4') gehörigen Suchfunktionen $P_1(\Theta)$, $P_2(\Theta)$, $P_3(\Theta)$, $P_4(\Theta)$, ... $P_i(\Theta)$, ... $P_p(\Theta)$ eine zu allen M Antennen (1, 2, 3, 4, 5, 6, 7, 8, 9) gehörige Gesamt-Suchfunktion $P(\Theta)$ durch eine multiplikative Verknüpfung gemäß der Gleichung

$$P(\Theta) = \prod_{i=1}^{P} P_i(\Theta)$$

ermittelt wird, wobei P die Anzahl der Antennen-Untergruppen (1', 2', 3', 4') ist, und
**daß** mittels der Gesamt-Suchfunktion $P(\Theta)$ zu deren Maxima gehörige Einfallswinkel $\Theta_1, \Theta_2, ..., \Theta_N$, die N Peilwerte $\Theta_1, \Theta_2, ..., \Theta_N$ der N Funkstationen darstellen, gewonnen werden.

2. Verfahren zur gleichzeitigen Funkpeilung mehrerer örtlich verteilter Funkstationen nach Anspruch 1,
**dadurch gekennzeichnet,**
**daß** der numerische Algorithmus zur Entwicklung der einfallswinkelabhängigen Suchfunktion $P_i(\Theta)$ der MUSIC-

Algorithmus (Multiple-Signal-Classification-Algorithmus) ist, mit dem sich die einfallswinkelabhängige Suchfunktion $P_i(\Theta)$ nach der Formel

$$P_i(\Theta) \;=\; \frac{1}{\underline{a}_i{}^*(\Theta) \cdot E_{N_i} \cdot E_{N_i}{}^* \cdot \underline{a}_i(\Theta)}{}^i$$

ergibt, wobei

$\underline{a}_i(\Theta)$ der Richtungsvektor der i-ten Antennen-Untergruppe,
$\underline{a}_i{}^*(\Theta)$ der transjugierte Richtungsvektor der i-ten Antennen-Untergruppe,
$E_{Ni}$ die Matrix bestehend aus insgesamt $D_i$ Rausch-Eigenvektoren einer Kovarianzmatrix S, die aus den zu T verschiedenen

Zeitpunkten von allen Antennen einer Untergruppe i gemessenen Amlitudenwerten besteht und
$E_{Ni}{}^*$ die transjugierte Matrix aus insgesamt D Rausch-Eigenvektoren einer Kovarianzmatrix S, die aus den zu T verschiedenen Zeit-punkten von allen Antennen einer Untergruppe i gemessenen Amplitudenwerten besteht bedeuten.

3.  Verfahren zur gleichzeitigen Funkpeilung mehrerer örtlich verteilter Funkstationen nach Anspruch 2,
    **dadurch gekennzeichnet,**
    **daß** die jeweils H Eigenwerte aller Kovarianzmatrizen $S_i$ in einem Histogramm aufgetragen werden und die Anzahl der kleinsten Eigenwerte $\lambda_{min}$ aller im Histogramm aufgretragenen Eigenwerte $\lambda_i$ die Anzahl D von Rausch-Eigen-werten $\lambda_{jN}$ ergibt.

4.  Verfahren zur gleichzeitigen Funkpeilung mehrerer örtlich verteilter Funkstationen nach Anspruch 3,
    **dadurch gekennzeichnet,**
    **daß** die Anzahl N der Funkstationen sich nach der Formel

$$N = H - \mathrm{int}(D/P)$$

ergibt,
wobei

H die Anzahl der Antennen einer Antennen-Untergruppe,
D die Anzahl der Rausch-Eigenwerte $\lambda_{jN}$,
P die Anzahl der Antennen-Untergruppen und
int(..) die Funktion zur Bildung der Ganzzahl des Operanden.

bedeuten.

5.  Verfahren zur gleichzeitigen Funkpeilung mehrerer örtlich verteilter Funkstationen nach einem der Ansprüche 1 bis 3,
    **dadurch gekennzeichnet,**
    **daß** der numerische Algorithmus zur Entwicklung der einfallswinkelabhängigen Suchfunktion $P_i(\Theta)$ der konventio-nelle Richtstrahlungs-Algorithmus, der Maximum-Likelihood-Algorithmus, der Maximum-Entropie-Algorithmus, der Algorithmus mit minimaler Euklidscher Norm und/oder der Algorithmus nach Capon ist.

6.  Vorrichtung zur gleichzeitigen Funkpeilung von N örtlich verteilten Funkstationen mit
    M örtlich verteilten Antennen (1, 2, 3, 4, 5, 6, 7, 8 und 9), die P Antennen-Untergruppen (1', 2', 3' und 4') mit jeweils mindestens drei bis zu H Antennen (1, 2, 3, 4, 5, 6, 7, 8 und 9) zugeordnet sind,
    einer Schaltvorrichtung (11, 11', 11'') zur zyklischen Weiterschaltung der von den P Antennen-Untergruppen (1', 2', 3' und 4') jeweils bis zu H gemessenen Amplitudenwerten einer Gesamtwelle, die aus von jeder Funkstation ausgestrahlten und sich überlagernden Einzelwellen besteht, auf jeweils H Meßkanäle (12, 12', 12''),
    und einer Verarbeitungs-Einheit (15), die ausgebildet ist, um ein Verfahren gemäß einem der Ansprüche 1 bis 5 auszuführen,
    **dadurch gekennzeichnet,**

**daß** alle P Antennen-Untergruppen (1', 2', 3', 4') nichtparallele Richtungsvektoren ($\underline{a}_1(\Theta)$, $a_2(\Theta)$, $\underline{a}_3(\Theta)$, $\underline{a}_4(\Theta)$) besitzen, wobei die komplexwertigen Werte der Elemente der einzelnen Richtungsvektoren $\underline{a}_i(\Theta)$ für die jeweilige Antenne die jeweilige Phasendifferenz zwischen der von der entsprechenden Antenne empfangenen ebenen Welle zur von einer Bezugsantenne empfangenen Welle in der Einfallsrichtung der empfangenen Gesamtwelle beschreibt.

7. Vorrichtung zur gleichzeitigen Funkpeilung mehreren örtlich verteilter Funkstationen nach Anspruch 6,
   **dadurch gekennzeichnet,**
   **daß** jede Antennen-Untergruppe (1', 2', 3', 4') aus genau drei Antennen (1, 2, 3, 4, 5, 6, 7, 8, 9) besteht.

8. Vorrichtung zur gleichzeitigen Funkpeilung mehreren örtlich verteilter Funkstationen nach einem der Ansprüche 6 oder 7,
   **dadurch gekennzeichnet,**
   **daß** jeder der H Meßkanäle (12, 12', 12") ein BandpaßFilter und (13, 13', 13'') einen Analog-Digital-Wandler (14, 14', 14") enthält.

9. Vorrichtung zur gleichzeitigen Funkpeilung mehrerer örtlich verteilter Funkstationen nach einem der Ansprüche 6 bis 8,
   **dadurch gekennzeichnet,**
   **daß** die Verarbeitungs-Einheit (15) eine Binär-Eingabe-Einheit (16) zum zyklischen Einlesen der auf den H Meßkanälen (12, 12', 12'') anliegenden H Amplitudenwerte, eine Speicher-Einheit (17) zum Speichern der aus den zyklisch eingelesenen H Amplitudenwerten ermittelten, zu den P Antennen-Untergruppen (1', 2', 3', 4') gehörigen Meßmatrizen $X_i$ und eine Prozessor-Einheit (18) zur Bestimmung der N Peilwerte ($\Theta_1$, $\Theta_2$,...,$\Theta_N$) der N örtlich verteilten Funkstationen umfaßt.

10. Vorrichtung zur gleichzeitigen Funkpeilung mehrerer örtlich verteilter Funkstationen nach einem der Ansprüche 6 bis 9,
    **dadurch gekennzeichnet,**
    **daß** die Vorrichtung zusätzlich eine Anzeige-Einrichtung (19) zur grafischen Darstellung der P Suchfunktionen $P_i(\Theta)$, der Gesamt-Suchfunktion $P(\Theta)$ und/oder der gesuchten N Peilwerte ($\Theta_1$, $\Theta_2$,..., $\Theta_N$) beinhaltet.

**Claims**

1. Method for simultaneous radio determination of N spatially-distributed radio stations via M spatially-distributed antennae (1, 2, 3, 4, 5, 6, 7, 8, 9), which are allocated to P antenna-subgroups (1', 2', 3', 4') with respectively at least 3 to H antennae (1, 2, 3, 4, 5, 6, 7, 8, 9), wherein search functions ($P_i(\Theta)$) dependent upon the angle of incidence are developed via a numerical algorithm for each antenna-subgroup i (1', 2', 3', 4') from amplitude values of a total wave consisting of individual waves transmitted from the radio stations and superposed one over the other, which are measured respectively by each antenna (1, 2, 3, 4, 5, 6, 7, 8, 9) of an antenna-subgroup (1', 2', 3', 4'), and from direction vectors $\underline{a}_i(\Theta)$ dependent upon the angle of incidence, which are determined respectively for each antenna-subgroup (1', 2', 3', 4'),
   wherein the extreme points of the search functions ($P_i(\Theta)$) represent solutions for the directions of the sought-after radio stations,
   and wherein the complex values of the elements of the individual direction vectors $\underline{a}_i(\Theta)$ for the respective antenna describe the respective phase difference between the plane wave received from the corresponding antenna and the wave received by a reference antenna in the direction of incidence of the received total wave, **characterised in that**
   a total search function $P(\Theta)$ associated with all M antennae (1, 2, 3, 4, 5, 6, 7, 8, 9) is determined from all of the search functions $P_1(\Theta)$, $P_2(\Theta)$, $P_3(\Theta)$, $P_4(\Theta)$, ... $P_i(\Theta)$, ... $P_p(\Theta)$ associated with each antenna-subgroup (1', 2', 3', 4') by multiplicative linking according to the equation

$$P(\Theta) = \prod_{i=1}^{P} P_i(\Theta)$$

wherein P is the number of antenna-subgroups (1', 2', 3', 4'), and **in that**, by means of the total search function $P(\Theta)$, angles of incidence $\Theta_1$, $\Theta_2$, ... $\Theta_N$ associated with its maxima, which represent N direction-finding values $\Theta_1$,

$\Theta_2$, ... $\Theta_N$ of the N radio stations, are obtained.

2. Method for simultaneous radio determination of several spatially-distributed radio stations according to Claim 1, **characterised in that**
the numerical algorithm for the development of the search function $P_i(\Theta)$ dependent upon the angle of incidence is the MUSIC algorithm (Multiple Signal Classification Algorithm), with which the search function $P_i(\Theta)$ dependent upon the angle of incidence is obtained according to the formula

$$P_i(\Theta) = \frac{1}{\underline{a}_i{}^*(\Theta) \cdot E_{Ni} \cdot E_{Ni}{}^* \cdot \underline{a}_i(\Theta)} i$$

wherein

$\underline{a}_i(\Theta)$ denotes the direction vector of the $i^{th}$ antenna-subgroup
$\underline{a}_i{}^*(\Theta)$ denotes the transjugated direction vector of the $i^{th}$ antenna-subgroup
$E_{Ni}$ denotes the matrix consisting of a total of $D_i$ noise-eigen-vectors of a covariance matrix S, which consists of the amplitude values measured at T different timing points of all antennae of a subgroup i, and
$E_{Ni}{}^*$ denotes the transjugated matrix consisting of a total of D noise-eigen-vectors of a covariance matrix S, which consists of the amplitude values measured at T different timing points of all antennae of a subgroup i.

3. Method for simultaneous radio determination of several spatially-distributed radio stations according to Claim 2, **characterised in that**
the respective H eigen-values of all covariance matrices $S_i$ are plotted in a histogram, and the number of the smallest eigen-values $\lambda_{min}$ of all of the eigen-values $\lambda_i$ plotted in the histogram provides the number D of the noise-eigen values $\lambda_{jN}$.

4. Method for simultaneous radio determination of several spatially-distributed radio stations according to Claim 3, **characterised in that**
the number N of radio stations is determined according to the formula

$$N = H - \text{int}(D/P),$$

wherein

H denotes the number of antennae of an antenna-subgroup,
D denotes the number of noise-eigen values $\lambda_{jN}$,
P denotes the number of antenna-subgroups, and int(...) denotes the function for the formation of the integer number of the operand.

5. Method for simultaneous radio determination of several spatially-distributed radio stations according to any one of Claims 1 to 3, **characterised in that**
the numerical algorithm for the development of the search function $P_i(\Theta)$ dependent upon the angle of incidence is the conventional directional-transmission algorithm, the maximum-likelihood algorithm, the maximum entropy algorithm, the algorithm with minimal Euclidean norm and/or the algorithm after Capon.

6. Device for simultaneous radio determination of N spatially-distributed radio stations comprising:

M spatially-distributed antennae (1, 2, 3, 4, 5, 6, 7, 8 and 9), which are allocated to P antenna-subgroups (1', 2', 3' and 4') in each case with at least three to H antennae (1, 2, 3, 4, 5, 6, 7, 8 and 9),
a switching device (11, 11', 11") for cyclical routing of the amplitude values measured by the P antenna-subgroups (1', 2', 3' and 4') respectively up to H of a total wave, which consists of individual waves transmitted from each radio station and superposed one over the other, respectively on H measurement channels (12, 12', 12"),
and a processing unit (15), which is designed for the execution of a method according to any one of Claims 1 to 5, **characterised in that**
all of the P antenna-subgroups (1', 2', 3', 4') provide non-parallel direction vectors ($\underline{a}_1(\Theta)$, $\underline{a}_2(\Theta)$, $\underline{a}_3(\Theta)$, $\underline{a}_4(\Theta)$),

wherein the complex values of the elements of the individual direction vectors $\underline{a}_i(\Theta)$ for the respective antenna describe the respective phase difference between the plane wave received by the corresponding antenna and the wave received by a reference antenna in the direction of incidence of the total wave received.

**7.** Device for simultaneous radio determination of several spatially-distributed radio stations according to Claim 6, **characterised in that** each antenna-subgroup (1', 2', 3', 4') consists of exactly three antennae (1, 2, 3, 4, 5, 6, 7, 8, 9).

**8.** Device for simultaneous radio determination of several spatially-distributed radio stations according to any one of Claims 6 or 7, **characterised in that** each of the H measurement channels (12, 12', 12") contains a band-pass filter (13, 13', 13") and an analog/digital converter (14, 14', 14").

**9.** Device for simultaneous radio determination of several spatially-distributed radio stations according to any one of Claims 6 to 8, **characterised in that** the processing unit (15) comprises a binary-input unit (16) for cyclical entry of the H amplitude values disposed on the H measurement channels (12, 12' 12"), a memory unit (17) for buffering the measurement matrices $X_i$ determined from the cyclically-entered H amplitude values associated with the P antenna-subgroups (1', 2', 3', 4') and a processor unit (18) for the determination of the N direction-finding values ($\Theta_1$, $\Theta_2$, ... $\Theta_N$) of the N spatially-distributed radio stations.

**10.** Device for simultaneous radio determination of several spatially-distributed radio stations according to any one of Claims 6 to 9, **characterised in that** the device additionally contains a display device (19) for graphic display of the P search functions ($P_i(\Theta)$), the total search function ($P(\Theta)$) and/or the sought-after N direction-finding values ($\Theta_1$, $\Theta_2$, ... $\Theta_N$).

## Revendications

**1.** Procédé de radiorepérage simultané de N stations radio réparties à différents endroits par le biais de M antennes (1, 2, 3, 4, 5, 6, 7, 8, 9) réparties à différents endroits qui sont affectées à P sous-groupes d'antennes (1', 2', 3', 4') comprenant respectivement 3 à H antennes (1, 2, 3, 4, 5, 6, 7, 8, 9), des fonctions de recherche ($P_i(\Theta)$) dépendant de l'angle d'incidence étant développées pour chaque sous-groupe d'antennes i (1', 2', 3', 4'), par le biais d'un algorithme numérique, à partir de valeurs d'amplitude d'une onde totale composée d'ondes individuelles émises par les stations radio et s'interférant, qui sont mesurées respectivement par chaque antenne (1, 2, 3, 4, 5, 6, 7, 8, 9) d'un sous-groupe d'antennes (1', 2', 3', 4') et à partir de vecteurs directionnels $a_i(\Theta)$ dépendant de l'angle d'incidence qui sont respectivement déterminés pour chaque sous-groupe d'antennes (1', 2', 3', 4'), les valeurs extrêmes des fonctions de recherche ($P_i(\theta)$) représentant des solutions aux directions des stations radio recherchées et les valeurs complexes des éléments des vecteurs directionnels $a_i(\theta)$ individuels pour l'antenne respective décrivant la différence de phase respective entre l'onde plane reçue par l'antenne correspondante et l'onde reçue par une antenne de référence dans la direction d'incidence de l'onde totale reçue, **caractérisé en ce que** une fonction de recherche globale $P(\theta)$ appartenant à toutes les M antennes (1, 2, 3, 4, 5, 6, 7, 8, 9) est déterminée à partir de toutes les fonctions de recherche $P_1(\theta)$, $P_2(\theta)$, $P_3(\theta)$, $P_4(\theta)$, ... $P_i(\theta)$, ... $P_p(\theta)$ appartenant à chaque sous-groupe d'antenne (1', 2', 3', 4') au moyen d'une combinaison multiplicative selon l'équation

$$P(\theta) = \prod_{i=1}^{P} P_i(\theta)$$

P étant le nombre des sous-groupes d'antennes (1', 2', 3', 4'), et **en ce que**, au moyen de la fonction de recherche globale $P(\theta)$, sont déterminés les angles d'incidence $\theta_1$, $\theta_2$, ..., $\theta_N$, appartenant aux valeurs extrêmes de celle-ci, qui représentent les N valeurs de repérage $\theta_1$, $\theta_2$, ..., $\theta_N$, des N

stations radio.

2. Procédé de radiorepérage simultané de plusieurs stations radio réparties à différents endroits selon la revendication 1,

**caractérisé en ce que**

l'algorithme numérique de développement de la fonction de recherche $P_i(\theta)$ dépendant de l'angle d'incidence est l'algorithme MUSIC (Multiple-Signal-Classification-Algorithmus) avec lequel la fonction de recherche $P_i(\theta)$ dépendant de l'angle d'incidence est obtenue par la formule

$$P_i(\Theta) = \frac{1}{\underline{a}_i{}^*(\Theta)\cdot E_{N_i}\cdot E_{N_i}{}^*\cdot\underline{a}_i(\Theta)}i$$

où

$\underline{a}_i(\theta)$ représente le vecteur directionnel du ième sous-groupe d'antennes,

$\underline{a}_i{}^*(\theta)$ représente le vecteur directionnel transjugé du ième sous-groupe d'antennes,

$E_{Ni}$ représente la matrice se composant de tous les $D_i$ vecteurs propres de bruit d'une matrice de covariance S, qui se compose des valeurs d'amplitude mesurées à T moments différents par toutes les antennes d'un sous-groupe i, et

$E_{Ni^*}$ représente la matrice transjugée de tous les D vecteurs propres de bruit d'une matrice de covariance S, qui se compose des valeurs d'amplitude mesurées à T moments différents par toutes les antennes d'un sous-groupe i.

3. Procédé de radiorepérage simultané de plusieurs stations radio réparties à différents endroits selon la revendication 2,

**caractérisé en ce que**

les respectivement H valeurs propres de toutes les matrices de covariance $S_i$ sont consignées dans un histogramme et le nombre des plus petites valeurs propres $\lambda_{min}$ de toutes les valeurs propres $\lambda_i$ consignées dans l'histogramme donne le nombre D de valeurs propres de bruit $\lambda_{jN}$.

4. Procédé de radiorepérage simultané de plusieurs stations radio réparties à différents endroits selon la revendication 3,

**caractérisé en ce que**

le nombre N de stations radio est obtenu par la formule suivante

$$N = H - \text{int}(D/P)$$

où

H représente le nombre d'antennes d'un sous-groupe d'antennes,

D représente le nombre de valeurs propre de bruit $\lambda_{jN}$,

P représente le nombre de sous-groupes d'antennes et

int(..) représente la fonction de formation du nombre entier de l'opérande.

5. Procédé de radiorepérage simultané de plusieurs stations radio réparties à différents endroits selon l'une quelconque des revendications 1 à 3,

**caractérisé en ce que**

l'algorithme numérique de développement de la fonction de recherche $P_i(\theta)$ dépendant de l'angle d'incidence est l'algorithme conventionnel du rayon directionnel, l'algorithme de vraisemblance maximale, l'algorithme d'entropie maximale, l'algorithme ayant la norme d'Euclide minimale et/ou l'algorithme de Capon.

6. Dispositif de radiorepérage simultané de N stations radio réparties à différents endroits avec M antennes (1, 2, 3, 4, 5, 6, 7, 8 et 9) réparties à différents endroits, qui sont affectées à P sous-groupes d'antennes (1', 2', 3' et 4') comprenant respectivement 3 à H antennes (1, 2, 3, 4, 5, 6, 7, 8 et 9), un dispositif de commutation (11, 11', 11") pour la commutation cyclique des respectivement jusqu'à H valeurs d'amplitude, mesurées par les P sous-groupes d'antennes (1', 2', 3' et 4'), d'une onde totale qui se compose d'ondes individuelles émises par chaque station radio et s'interférant sur respectivement H canaux de mesure (12, 12', 12"), et une unité de traitement (15), qui est conçue pour effectuer un procédé selon l'une quelconque des revendications 1 à 5,

**caractérisé en ce que**

tous les P sous-groupes d'antenne (1', 2', 3', 4') possèdent des vecteurs directionnels non parallèles ($\underline{a}_1(\theta)$, $\underline{a}_2(\theta)$, $\underline{a}_3(\theta)$, $\underline{a}_4(\theta)$), dans lequel les valeurs complexes des éléments des vecteurs directionnels $\underline{a}_i(\theta)$ individuels pour l'antenne respective décrivent la différence de phase respective entre l'onde plane reçue par l'antenne correspondante et l'onde reçue par une antenne de référence dans la direction d'incidence de l'onde totale reçue.

7. Dispositif de radiorepérage simultané de plusieurs stations radio réparties à différents endroits selon la revendication 6,

**caractérisé en ce que**

chaque sous-groupe d'antennes (1', 2', 3', 4') se compose exactement de 3 antennes (1, 2, 3, 4, 5, 6, 7, 8, 9).

8. Dispositif de radiorepérage simultané de plusieurs stations radio réparties à différents endroits selon l'une quelconque des revendications 6 ou 7,

**caractérisé en ce que**

chacun des H canaux de mesure (12, 12', 12") contient un filtre passe-bande (13, 13', 13") et un convertisseur analogique-numérique (14, 14', 14").

9. Dispositif de radiorepérage simultané de plusieurs stations radio réparties à différents endroits selon l'une quelconque des revendications 6 bis 8,

**caractérisé en ce que**

l'unité de traitement (15) comprend une unité d'entrée binaire (16) pour la lecture cyclique des H valeurs d'amplitudes présentes sur les H canaux de mesure (12, 12', 12"), une mémoire (17) pour enregistrer les matrices de mesure $X_i$ appartenant aux P sous-groupes d'antennes (1', 2', 3', 4') déterminées à partir des H valeurs d'amplitude lues cycliquement, et une unité centrale (18) pour déterminer les N valeurs de repérage ($\theta_1$, $\theta_2$, ..., $\theta_N$) des N stations radio réparties à différents endroits.

10. Dispositif de radiorepérage simultané de plusieurs stations radio réparties à différents endroits selon l'une quelconque des revendications 6 à 9,

**caractérisé en ce que**

le dispositif comprend en outre un dispositif d'affichage (19) pour représenter graphiquement les P fonctions de recherche $P_i(\theta)$, la fonction de recherche globale $P(\theta)$ et/ou les N valeurs de repérage ($\theta_1$, $\theta_2$, ..., $\theta_N$) recherchées.

Fig. 1

Start

Bestimmung der Richtungsvektoren
$\underline{a}_i(\Theta)$ für alle P Antennen-Untergruppe
über Kalibriervorgang — S10

Einlesen und Abspeichern der
Meßmatrizen $X_i$ für alle
P Antennen-Untergruppen — S20

Berechnung der Kovarianzmatrix $S_i$
aus den Meßmatrizen für alle
P-Antennen-Untergruppen — S30

Ermittlung sämtlicher Eigenwerte $\lambda_j$
für jede Kovarianzmatrix $S_i$ — S40

Ermittlung der Anzahl der Rausch-Eigenwerte $\lambda_{jN}$
für die Bestimmung der Anzahl an Funkstationen
und Berechnung der Rausch-Eigenvektoren — S50

Berechnung der Suchfunktion
$P_i(\Theta)$ für jede der
P Antennen-Untergruppen — S60

Berechnung der
Gesamt-Suchfunktion $P(\Theta)$ für
alle Antennen — S70

Ermittlung der Optimas der Gesamt-Suchfunktion
$P(\Theta)$ und deren zugehörige Einfallwinkel $\Theta_i$
als Peilwerte $\Theta_i$ der gesuchten Funkstationen — S80

Ende

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4407716 A1
- US 2003063029 A1

- DE 10157109 A1

**In der Beschreibung aufgeführte Nicht-Patentliteratur**

- **RALPH O. SCHMIDT.** Multiple Emitter Location and Signal Parameter Estimation. *IEEE Transactions on Antennas and Propagation,* Marz 1986, vol. AP34 (3), 276-280
- **RICHARD RAY ; THOMAS KAILATH.** ESPRIT - Estimation of Signal Parameters Via Rotational Invariance Techniques. *IEEE Transactions on Acoustics, Speech and Signal Processing,* Juli 1989, vol. 37 (7), 984-995

- **CAPON.** High-resolution frequency-wave number spectrum analysis. *Proceedings IEEE,* 1969, vol. 57, 1408-1418
- **KAH-CHYE TAN et al.** A Study of the Rank-Ambiguity Issues in Direction-of-Arrival Estimation. *IEEE Transactions on Signal Processing,* April 1996, vol. 44 (4), 880-887
- **NACH R.O. SCHMIDT.** Multiple Emitter Location and Signal Parameter Estimation. *IEEE Transactions on Antennas and Propagation,* Marz 1986, vol. AP-34 (3), 276-280